(19) Europäisches Patentamt
European Patent Office
Office européen des brevets

(11) EP 3 865 313 B1

(12) **EUROPEAN PATENT SPECIFICATION**

(45) Date of publication and mention of the grant of the patent:
**27.12.2023 Bulletin 2023/52**

(21) Application number: **21155309.4**

(22) Date of filing: **04.02.2021**

(51) International Patent Classification (IPC):
***B60C 1/00*** $^{(2006.01)}$ ***B60C 3/04*** $^{(2006.01)}$
***C08L 17/00*** $^{(2006.01)}$ ***C08L 19/00*** $^{(2006.01)}$
***B60C 13/00*** $^{(2006.01)}$

(52) Cooperative Patent Classification (CPC):
(C-Sets available)
**B60C 1/0025; B60C 3/04; C08L 7/00; C08L 9/00;**
B60C 2013/005; B60C 2013/007 (Cont.)

(54) **TIRE**

REIFEN

PNEUMATIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.02.2020 JP 2020021471**

(43) Date of publication of application:
**18.08.2021 Bulletin 2021/33**

(73) Proprietor: **Sumitomo Rubber Industries, Ltd.**
**Kobe-shi, Hyogo-ken 651-0072 (JP)**

(72) Inventor: **YOSHIZUMI, Takuma**
**Kobe-shi, Hyogo 651-0072 (JP)**

(74) Representative: **Manitz Finsterwald**
**Patent- und Rechtsanwaltspartnerschaft mbB**
**Martin-Greif-Strasse 1**
**80336 München (DE)**

(56) References cited:
**EP-A1- 2 796 299**
**EP-A2- 2 947 116**
**WO-A1-2018/115715**
**DE-T5-112018 002 044**
**JP-A- 2019 026 758**
**US-A1- 2014 090 764**
**US-A1- 2014 228 505**

EP 3 865 313 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08L 7/00, C08L 9/00, C08L 15/00, C08L 19/003;**
**C08L 9/00, C08K 3/04, C08L 7/00, C08L 15/00, C08L 19/003;**
**C08L 9/00, C08K 3/04, C08L 7/00, C08L 19/003**

## Description

BACKGROUND OF THE INVENTION

Field of the Invention

The present invention relates to a tire.

Description of the Background Art

In recent years, waste recycling has been required from the viewpoint of environmental problems and resource saving, and has also been required for tires. Waste tires are used for various purposes after being subjected to various treatments such as finely crushing the tires with a crusher and removing fibers and steel to reuse the crushed material as rubber powder.

In particular, circular-type so-called material recycling in which tires are recycled is considered as being very important, and, for example, Japanese Laid-Open Patent Publication Nos. 2002-338743 and 2005-2140 each disclose a method for reusing waste tires as recycled rubber or powder rubber for tires. However, the recycled rubber and the powder rubber have problems such as an increase in heat generation performance and a decrease in wear resistance or the like, so that the use ratio of the recycled rubber or the powder rubber is decreasing year by year, and improvement of the recycled rubber and the powder rubber is desired. JP 2019-026758 A and US 2014/228505 A1 disclose rubber compositions for tire sidewalls comprising a modified recycled rubber.

The present invention has been made in view of the above circumstances, and an object of the present invention is to provide a tire having improved crack growth resistance of sidewalls while increasing a use ratio of recycled rubber or powder rubber.

SUMMARY OF THE INVENTION

The present invention is directed to a tire as defined in independent claim 1. According to the invention the tire includes sidewalls each formed from a rubber composition containing a modified rubber crumb and having an elongation at break at 23°C of not less than 500%, wherein the tire satisfies the following formula (1), and each of the sidewalls has a thickness of not less than 1.5 mm.

$$\text{Cross-section height/cross-section width} \times 100 \geq 60\% \qquad (1)$$

The rubber composition preferably contains an isoprene-based rubber and a butadiene rubber. The rubber composition preferably contains 1.4 parts by mass or greater of sulfur per 100 parts by mass of a rubber component.

The rubber composition preferably contains a carbon black A having a nitrogen adsorption specific surface area of 100 to 150 $m^2/g$ and a carbon black B having a nitrogen adsorption specific surface area of 10 to 80 $m^2/g$.

The modified rubber crumb is preferably a rubber crumb functionalized with a thiuram sulfide-based compound.

Each of the sidewalls has a thickness of not less than 1.5 mm.

Since the tire according to the present invention includes sidewalls each formed from a rubber composition containing a modified rubber crumb and having an elongation at break at 23°C of not less than 500%, and satisfies the above formula (1), the crack growth resistance of the sidewalls can be improved while increasing a use ratio of recycled rubber or powder rubber.

BRIEF DESCRIPTION OF THE DRAWINGS

FIG. 1 is a tire meridional cross-sectional view showing an example of a pneumatic tire 1 in a normal state according to an embodiment.

DESCRIPTION OF THE PREFERRED EMBODIMENTS

The tire according to the present invention includes sidewalls each formed from a rubber composition containing a modified rubber crumb and having an elongation at break at 23°C of not less than 500%, and satisfies the above formula (1). Accordingly, the crack growth resistance of the sidewalls can be improved while increasing a use ratio of recycled rubber or powder rubber.

The mechanism for achieving such an effect is not clear but is inferred as described below.

In general, recycled rubber or powder rubber has a drawback that the rubber has poor reactivity in vulcanization and becomes a starting point of fracture due to deformation of rubber, and when this rubber is contained, a problem of deterioration of crack growth resistance and the like arises. On the other hand, the above tire includes sidewalls (vulcanized rubber composition) in which the modified rubber crumb is used and which have an elongation at break (EB) of not less than 500%. Thus, it is possible to increase the use ratio of recycled rubber or powder rubber and to impart higher rubber strength to improve crack growth resistance, strength against tensile fracture, etc. Furthermore, since the tire size satisfies the formula (1), the strain due to rolling is small, and stress concentration is relieved, so that good durability such as crack growth resistance can be imparted. Therefore, it is inferred that, by using the tire that includes sidewalls containing the modified rubber crumb and having an elongation at break of not less than 500% and that satisfies the formula (1), the crack growth resistance of the sidewalls can be improved while increasing the use ratio of recycled rubber or powder rubber.

For example, when a modified rubber crumb having high reactivity is used as a modified rubber, the modified rubber crumb is unlikely to become a starting point of fracture, and the elongation at break is increased, so that rubber strength such as crack growth resistance and strength against tensile fracture is remarkably improved. Also, by blending a carbon black having high reinforcing properties as a carbon black, rubber strength such as crack growth resistance and strength against tensile fracture can be ensured. Furthermore, by making a tire that satisfies the formula (1), stress concentration is relieved, so that good durability such as crack growth resistance can be imparted. Therefore, in the above tire, it is inferred that the crack growth resistance of the sidewalls can be improved while increasing the use ratio of recycled rubber or powder rubber.

As described above, the above tire solves the problem (object) of improving the crack growth resistance of sidewalls while increasing the use ratio of recycled rubber or powder rubber, by being configured as a tire that includes sidewalls each formed from a rubber composition containing a modified rubber crumb and having an elongation at break at 23°C of not less than 500% and that satisfies the formula (1). That is, the parameters of an elongation at break at 23°C of not less than 500% and cross-section height/cross-section width $\times$ 100 $\geq$ 50% do not define the problem (object), and the problem of the present application is to improve the crack growth resistance of sidewalls while increasing the use ratio of recycled rubber or powder rubber, and a configuration to satisfy these parameters is employed as a solution to the problem.

Here, examples of the method for obtaining a rubber composition (vulcanized rubber composition) having an elongation at break at 23°C of not less than 500% include (a) a method of using a modified rubber crumb having high reactivity, (b) a method of blending two or more rubbers having different hardnesses (for example, a mixed rubber containing an isoprene-based rubber, a butadiene rubber, etc.), (c) a method of blending a carbon black having high reinforcing properties, (d) a method of blending two or more carbon blacks having a small particle size and a large particle size, (e) a method of optimizing a vulcanization accelerator ratio, (f) a method of using a high-molecular-weight polymer, etc., and methods obtained by combining these methods as appropriate.

[Rubber Composition (Vulcanized Rubber Composition)]

The rubber composition (vulcanized rubber composition) for forming the sidewalls of the tire has an elongation at break at 23°C (EB(23°C)) of not less than 500%. From the viewpoint of rubber strength (crack growth resistance, strength against tensile fracture, etc.), the EB(23°C) is preferably not less than 540%, more preferably not less than 560%, further preferably not less than 570%, and particularly preferably not less than 580%. The upper limit of the EB(23°C) is not particularly limited, but the EB(23°C) is preferably not greater than 800%, more preferably not greater than 750%, and further preferably not greater than 700%, for the reason that a broken rubber is appropriately cut off from the rubber surface and a good wear appearance can be obtained. The EB(23°C) is a value that conforms to JIS K6251, and can be specifically measured by a method described in later-described Examples.

(Modified Rubber Crumb)

The rubber composition (vulcanized rubber composition) for forming the sidewalls contains a modified rubber crumb. In the modified rubber crumb, a part of the crosslinked structure in the rubber is cut by desulfurization and functionalization to increase the reactivity thereof. Thus, problems such as a decrease in hardness, deterioration of heat generation properties, and an increase in the viscosity of an unvulcanized rubber are improved.

Here, the recycled rubber is not particularly limited, and examples of the recycled rubber include crushed rubber obtained by mechanical crushing at room temperature or in a frozen state, desulfurized rubber obtained by further desulfurization, rubber obtained by recycling used rubber of automobile tires, tubes, and other rubber products specified in JIS K6313, and recycled rubber having properties similar to those of these rubbers. Examples of the "modified rubber crumb" include rubber materials obtained by functionalizing a rubber having a functional group capable of acting on an unvulcanized diene-based rubber, among the recycled rubber and the vulcanized rubber powder (powder rubber), with

a modifying compound (introducing the modifying compound thereto).

From the viewpoint of elongation at break, crack growth resistance, etc., for example, a thiuram sulfide-based compound or the like is suitable for use as a modifying compound that can be used for the functionalization. One modifying compound may be used alone, or two or more modifying compounds may be used in combination. Examples of the thiuram sulfide-based compound include alkyl thiuram sulfides, aryl thiuram sulfides, heterocyclic thiuram sulfides, thiuram disulfide, thiuram polysulfide, tetrabenzyl thiuram disulfide, tetraalkyl thiuram disulfides, tetramethyl thiuram disulfide, tetraethyl thiuram disulfide, and dipentamethyl thiuram monosulfide.

From the viewpoint of improving combined performance of low heat generation properties, processability, and rubber strength, the amount of the modified rubber crumb per 100 parts by mass of a rubber component is preferably not less than 5 parts by mass, more preferably not less than 7 parts by mass, and further preferably not less than 9 parts by mass. From the viewpoint of the physical properties (viscosity, hardness, breaking physical properties, heat generation properties, etc.) of the rubber composition, the amount is preferably not greater than 80 parts by mass, more preferably not greater than 60 parts by mass, further preferably not greater than 40 parts by mass, and particularly preferably not greater than 35 parts by mass.

The rubber composition (vulcanized rubber composition) may further contain a powder recycled rubber. In the case where only a modified rubber crumb or a recycled rubber subjected to desulfurization is used, there is a concern that breaking energy, etc., will decrease, but such a decrease can be suppressed by using the powder recycled rubber together.

The "powder recycled rubber" refers to materials that are crushed rubber obtained by mechanical crushing at room temperature or in a frozen state, desulfurized rubber obtained by further desulfurization, rubber obtained by recycling used rubber of automobile tires, tubes, and other rubber products specified in JIS K6313, and recycled rubber having properties similar to those of these rubbers and that are not subjected to denaturing treatment such as desulfurization and functionalization. By using the powder recycled rubber and the modified rubber crumb in combination, processability and vulcanization physical properties tend to be improved even with the rubber composition containing the recycled rubber. It should be noted that, in the rubber composition, the modified rubber crumb and the recycled rubber such as powder recycled rubber are materials that do not correspond to the rubber component.

From the viewpoint of elongation at break, crack growth resistance, etc., the amount of the powder recycled rubber per 100 parts by mass of the rubber component is preferably not less than 5 parts by mass, more preferably not less than 7 parts by mass, and further preferably not less than 9 parts by mass. From the viewpoint of the physical properties (viscosity, hardness, breaking physical properties, heat generation properties, etc.) of the rubber composition, the amount is preferably not greater than 80 parts by mass, more preferably not greater than 60 parts by mass, further preferably not greater than 40 parts by mass, and particularly preferably not greater than 35 parts by mass.

As the modified rubber crumb and the recycled rubber such as powder recycled rubber, products of Lehigh Technologies, Inc., MURAOKA RUBBER RECLAIMING Co., Ltd., ASAHI SAISEIGOMU Co., Ltd., etc., can be used.

(Rubber Component)

The rubber component that can be used for the rubber composition is not particularly limited, and rubbers used in the tire field, etc., can be used. Examples of the rubber component include isoprene-based rubbers and diene-based rubbers such as butadiene rubber (BR), styrene-butadiene rubber (SBR), acrylonitrile-butadiene rubber (NBR), chloroprene rubber (CR), isobutylene-isoprene-rubber (IIR), and styrene-isoprene-butadiene copolymer rubber (SIBR). Among them, isoprene-based rubbers and BR are preferable. In addition, from the viewpoint of crack growth resistance, etc., a blend rubber containing two or more rubbers having different hardnesses such as an isoprene-based rubber and BR is preferably used, and an isoprene-based rubber and BR are more preferably used in combination. These rubber components may be used individually, or two or more of these rubber components may be used in combination.

From the viewpoint of low heat generation properties and rubber strength, the amount of the isoprene-based rubber in 100% by mass of the rubber component is preferably not less than 5% by mass, more preferably not less than 25% by mass, and further preferably not less than 40% by mass. The upper limit of the amount is not particularly limited, and the amount may be 100% by mass, but is preferably not greater than 90% by mass, more preferably not greater than 75% by mass, and further preferably not greater than 60% by mass.

Examples of the isoprene-based rubber include natural rubber (NR), isoprene rubber (IR), reformed NR, modified NR, and modified IR. As the NR, NRs that are generally used in the tire industry, such as SIR20, RSS#3, and TSR20, can be used. As the IR, IRs that are generally used in the tire industry, such as IR2200, can be used. Examples of the reformed NR include deproteinized natural rubber (DPNR) and ultra-pure natural rubber (UPNR), examples of the modified NR include epoxidized natural rubber (ENR), hydrogenated natural rubber (HNR), and grafted natural rubber, and examples of the modified IR include epoxidized isoprene rubber, hydrogenated isoprene rubber, and grafted isoprene rubber. These rubbers may be used individually, or two or more of these rubbers may be used in combination.

In the case of containing BR, the amount of the BR in 100% by mass of the rubber component is preferably

not less than 10% by mass, more preferably not less than 30% by mass, and further preferably not less than 40% by mass. The amount is preferably not greater than 80% by mass, more preferably not greater than 70% by mass, and further preferably not greater than 60% by mass. When the amount is set to be within the above range, sidewalls having good rubber physical properties tend to be obtained.

From the viewpoint of crack growth resistance, etc., the cis content of the BR is preferably not less than 80% by mass, more preferably not less than 85% by mass, further preferably not less than 90% by mass, and particularly preferably not less than 95% by mass. In the present description, the cis content (the amount of cis-1,4-bonds) is a value calculated from signal intensity measured by infrared absorption spectrum analysis or NMR analysis.

The BR is not particularly limited, and examples of the BR include BRs that are generally used in the tire industry, such as a BR having a high cis content, a BR containing 1,2-syndiotactic polybutadiene crystals (SPB-containing BR), a butadiene rubber synthesized by using a rare earth element catalyst (rare earth BR), and a tin-modified butadiene rubber (tin-modified BR) modified with a tin compound. As for the BR, as commercially available products, products of Ube Industries, Ltd., JSR Corporation, Asahi Kasei Corporation, Zeon Corporation, etc., can be used. These BRs can be used individually, or two or more of these BRs may be used in combination.

Any of an unmodified BR and a modified BR can be used as the BR.

As the modified BR, a modified BR having a functional group that interacts with a filler such as silica, etc., can be used. Examples of such a modified BR include a terminal-modified BR obtained by modifying at least one terminal of a modified BR with a compound (modifier) having the functional group (a terminal-modified BR having the functional group at a terminal thereof), a main chain-modified BR having the functional group in the main chain thereof, a main chain/terminal-modified BR having the functional group in the main chain and at a terminal thereof (for example, a main chain/terminal-modified BR that has the functional group in the main chain thereof and in which at least one terminal thereof is modified with the modifier), and a terminal-modified BR that is modified (coupled) by using a multifunctional compound having two or more epoxy groups in the molecule thereof and to which a hydroxyl group or an epoxy group is introduced.

Examples of the above-described functional group include an amino group, an amide group, a silyl group, an alkoxysilyl group, an isocyanate group, an imino group, an imidazole group, a urea group, an ether group, a carbonyl group, an oxycarbonyl group, a mercapto group, a sulfide group, a disulfide group, a sulfonyl group, a sulfinyl group, a thiocarbonyl group, an ammonium group, an imide group, a hydrazo group, an azo group, a diazo group, a carboxyl group, a nitrile group, a pyridyl group, an alkoxy group, a hydroxyl group, an oxy group, and an epoxy group. These functional groups may have a substituent. Among them, an amino group (preferably, an amino group obtained by substituting a hydrogen atom of an amino group with an alkyl group having 1 to 6 carbon atoms), an alkoxy group (preferably, an alkoxy group having 1 to 6 carbon atoms), and an alkoxysilyl group (preferably, an alkoxysilyl group having 1 to 6 carbon atoms) are preferable.

For example, a BR modified with a compound (modifier) represented by the following formula, etc., are suitable for use as the modified BR.

[Chem. 1]

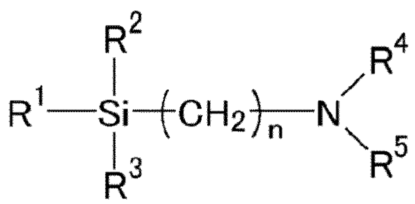

wherein $R^1$, $R^2$, and $R^3$ are the same or different from each other, and each represent an alkyl group, an alkoxy group, a silyloxy group, an acetal group, a carboxyl group (-COOH), a mercapto group (-SH), or a derivative thereof, $R^4$ and $R^5$ are the same or different from each other, and each represent a hydrogen atom or an alkyl group, $R^4$ and $R^5$ may be linked together to form a ring structure together with a nitrogen atom, and "n" represents an integer.

As $R^1$, $R^2$, and $R^3$, an alkoxy group is suitable (an alkoxy group preferably having 1 to 8 carbon atoms, more preferably 1 to 4 carbon atoms). As $R^4$ and $R^5$, an alkyl group (preferably, an alkyl group having 1 to 3 carbon atoms) is suitable. The integer "n" is preferably 1 to 5, more preferably 2 to 4, and further preferably 3. In addition, when $R^4$ and $R^5$ are linked together to form a ring structure together with a nitrogen atom, a four to eight-membered ring is preferably formed. Examples of the alkoxy group include cycloalkoxy groups (a cyclohexyloxy group, etc.) and aryloxy groups (a phenoxy group, a benzyloxy group, etc.).

Specific examples of the compound (modifier) represented by the above formula include 2-dimethylaminoethyl trimethoxysilane, 3-dimethylaminopropyl trimethoxysilane, 2-dimethylaminoethyl triethoxysilane, 3-dimethylaminopropyl triethoxysilane, 2-diethylaminoethyl trimethoxysilane, 3-diethylaminopropyl trimethoxysilane, 2-diethylaminoethyl triethoxysilane, and 3-diethylaminopropyl triethoxysilane. Among them, 3-dimethylaminopropyl trimethoxysilane, 3-dimethylaminopropyl triethoxysilane, and 3-diethylaminopropyl trimethoxysilane are preferable. These compounds may be used individually, or two or more of these compounds may be used in combination.

As the modified BR, a modified BR modified with the following compound (modifier) is also suitable for use. Examples of the modifier include: polyglycidyl ethers of polyhydric alcohols, such as ethylene glycol diglycidyl ether, glycerin triglycidyl ether, trimethylolethane triglycidyl ether, and trimethylolpropane triglycidyl ether; polyglycidyl ethers of aromatic compounds having two or more phenol groups, such as diglycidylated bisphenol A; polyepoxy compounds such as 1,4-diglycidylbenzene, 1,3,5-triglycidylbenzene, and polyepoxylated liquid polybutadiene; epoxy group-containing tertiary amines such as 4,4'-diglycidyl-diphenylmethylamine and 4,4'-diglycidyl-dibenzylmethylamine; diglycidylamino compounds such as diglycidylaniline, N,N'-diglycidyl-4-glycidyloxy aniline, diglycidyl orthotoluidine, tetraglycidyl metaxylenediamine, tetraglycidylaminodiphenylmethane, tetraglycidyl-p-phenylenediamine, diglycidylaminomethylcyclohexane, and tetraglycidyl-1,3,-bisaminomethylcyclohexane;

amino group-containing acid chlorides such as bis-(1-methylpropyl)carbamic acid chloride, 4-morpholinecarbonyl chloride, 1-pyrrolidinecarbonyl chloride, N,N-dimethylcarbamic acid chloride, and N,N-diethylcarbamic acid chloride; epoxy group-containing silane compounds such as 1,3-bis-(glycidyloxypropyl)-tetramethyldisiloxane and (3-glycidyloxypropyl)-pentamethyldisiloxane;

sulfide group-containing silane compounds such as (trimethylsilyl)[3-(trimethoxysilyl)propyl]sulfide, (trimethylsilyl)[3-(triethoxysilyl)propyl]sulfide, (trimethylsilyl)[3-(tripropoxysilyl)propyl]sulfide, (trimethylsilyl)[3-(tributoxysilyl)propyl]sulfide, (trimethylsilyl)[3-(methyldimethoxysilyl)propyl]sulfide, (trimethylsilyl)[3-(methyldiethoxysilyl)propyl]sulfide, (trimethylsilyl)[3-(methyldipropoxysilyl)propyl]sulfide, and (trimethylsilyl)[3-(methyldibutoxysilyl)propyl] sulfide;

N-substituted aziridine compounds such as ethyleneimine and propyleneimine; alkoxysilanes such as methyltriethoxysilane; (thio)benzophenone compounds having an amino group and/or a substituted amino group, such as 4-N,N-dimethylaminobenzophenone, 4-N,N-dit-butylaminobenzophenone, 4-N,N-diphenylaminobenzophenone, 4,4'-bis(dimethylamino)benzophenone, 4,4'-bis(diethylamino)benzophenone, 4,4'-bis(diphenylamino)benzophenone, and N,N,N',N'-bis-(tetraethylamino)benzophenone; benzaldehyde compounds having an amino group and/or a substituted amino group, such as 4-N,N-dimethylaminobenzaldehyde, 4-N,N-diphenylaminobenzaldehyde, and 4-N,N-divinylaminobenzaldehyde; N-substituted pyrrolidones such as N-methyl-2-pyrrolidone, N-vinyl-2-pyrrolidone, N-phenyl-2-pyrrolidone, N-t-butyl-2-pyrrolidone, and N-methyl-5-methyl-2-pyrrolidone; N-substituted piperidones such as N-methyl-2-piperidone, N-vinyl-2-piperidone, and N-phenyl-2-piperidone; N-substituted lactams such as N-methyl-ε-caprolactam, N-phenyl-ε-caprolactam, N-methyl-ω-laurolactam, N-vinyl-ω-laurolactam, N-methyl-β-propiolactam, and N-phenyl-β-propiolactam; and moreover,

N,N-bis-(2,3-epoxypropoxy)-aniline, 4,4-methylene-bis-(N,N-glycidylaniline), tris-(2,3-epoxypropyl)-1,3,5-triazine-2,4,6-triones, N,N-diethylacetamide, N-methylmaleimide, N,N-diethyl urea, 1,3-dimethylethylene urea, 1,3-divinylethylene urea, 1,3-diethyl-2-imidazolidinone, 1-methyl-3-ethyl-2-imidazolidinone, 4-N,N-dimethylaminoacetophenone, 4-N,N-diethylaminoacetophenone, 1,3-bis(diphenylamino)-2-propanone, and 1,7-bis(methylethylamino)-4-heptanone. Among them, modified BRs modified with alkoxysilanes are preferable.

As the modified BR modified with the compound (modifier) represented by the above formula, a BR obtained by modifying the polymerization terminals (active terminals) of a solution-polymerized butadiene rubber with the compound represented by the above formula, etc., are suitably used. Modification with the above compounds (modifiers) can be carried out by a known method.

(Carbon Black)

From the viewpoint of crack growth resistance, etc., the rubber composition preferably contains carbon black. A carbon black may be used alone, or two or more carbon blacks may be used in combination. As the carbon black, products of Asahi Carbon Co., Ltd., Cabot Japan K.K., Tokai Carbon Co., Ltd., Mitsubishi Chemical Corporation, Lion Corporation, NSCC Carbon Co., Ltd., Columbia Carbon Co., etc., can be used.

The amount of the carbon black (total amount of the carbon black) per 100 parts by mass of the rubber component is preferably not less than 20 parts by mass, more preferably not less than 30 parts by mass, and further preferably not less than 35 parts by mass. When the amount is set to be not less than the lower limit, sufficient reinforcing properties tend to be achieved. In addition, the upper limit of the amount is not particularly limited, but the amount is preferably not greater than 100 parts by mass, more preferably not greater than 80 parts by mass, and further preferably not greater than 60 parts by mass. When the amount is set to be not greater than the upper limit, good low heat generation properties tend to be achieved.

The carbon black is not particularly limited, but, for example, a carbon black having a nitrogen adsorption specific surface area ($N_2SA$) of 100 to 150 $m^2/g$ (hereinafter, also referred to as carbon black A), a carbon black having a nitrogen adsorption specific surface area ($N_2SA$) of 10 to 80 $m^2/g$ (hereinafter, also referred to as carbon black B), etc., are suitable for use.

As for the carbon black A (carbon black having an $N_2SA$ of 100 to 150 $m^2/g$), from the viewpoint of rubber strength such as crack growth resistance and strength against tensile fracture, the lower limit of the $N_2SA$ is more preferably not less than 105 $m^2/g$ and further preferably not less than 110 $m^2/g$. From the viewpoint of dispersibility, the upper limit of the $N_2SA$ is more preferably not greater than 140 $m^2/g$ and further preferably not greater than 130 $m^2/g$.

In the case of containing the carbon black A, the amount of the carbon black A per 100 parts by mass of the rubber component is preferably not less than 5 parts by mass, more preferably not less than 10 parts by mass, and further preferably not less than 15 parts by mass. When the amount is set to be not less than the lower limit, good rubber strength such as crack growth resistance and strength against tensile fracture tends to be achieved. In addition, the upper limit of the amount is not particularly limited, but the amount is preferably not greater than 60 parts by mass, more preferably not greater than 50 parts by mass, and further preferably not greater than 40 parts by mass. When the amount is set to be not greater than the upper limit, good low heat generation properties tend to be achieved.

As for the carbon black B (carbon black having an $N_2SA$ of 10 to 80 $m^2/g$), from the viewpoint of rubber strength such as crack growth resistance and strength against tensile fracture, the lower limit of the $N_2SA$ is more preferably not less than 20 $m^2/g$ and further preferably not less than 30 $m^2/g$. From the viewpoint of dispersibility, the upper limit of the $N_2SA$ is more preferably not greater than 60 $m^2/g$ and further preferably not greater than 50 m2/g.

In the case of containing the carbon black B, the amount of the carbon black B per 100 parts by mass of the rubber component is preferably not less than 10 parts by mass, more preferably not less than 20 parts by mass, and further preferably not less than 25 parts by mass. When the amount is set to be not less than the lower limit, good rubber strength such as crack growth resistance and strength against tensile fracture tends to be achieved. In addition, the upper limit of the amount is not particularly limited, but the amount is preferably not greater than 100 parts by mass, more preferably not greater than 80 parts by mass, and further preferably not greater than 60 parts by mass. When the amount is set to be not greater than the upper limit, good low heat generation properties tend to be achieved.

(Silica)

The rubber composition may contain silica. Examples of the silica include dry-process silica (anhydrous silica) and wet-process silica (hydrous silica). Among them, wet-process silica is preferable for the reason that it has a higher silanol group content. As commercially available products, products of Degussa, Rhodia, Tosoh Silica Corporation, Solvay Japan, Ltd., Tokuyama Corporation, etc., can be used. These silicas may be used individually, or two or more of these silicas may be used in combination.

In the case of containing silica, the amount of the silica per 100 parts by mass of the rubber component is preferably not less than 5 parts by mass, more preferably not less than 10 parts by mass, and further preferably not less than 20 parts by mass. The upper limit of the amount is preferably not greater than 150 parts by mass, more preferably not greater than 100 parts by mass, and further preferably not greater than 60 parts by mass.

The nitrogen adsorption specific surface area ($N_2SA$) of the silica is preferably not less than 70 $m^2/g$, more preferably not less than 140 $m^2/g$, and further preferably not less than 160 $m^2/g$. When the $N_2SA$ is set to be not less than the lower limit, good fracture strength tends to be achieved. In addition, the upper limit of the $N_2SA$ of the silica is not particularly limited, but the $N_2SA$ is preferably not greater than 500 $m^2/g$, more preferably not greater than 300 $m^2/g$, and further preferably not greater than 250 $m^2/g$. When the $N_2SA$ is set to be not greater than the upper limit, good dispersibility tends to be achieved.

The $N_2SA$ of the silica is a value measured by the BET method according to ASTM D3037-93.

(Silane Coupling Agent)

In the case where the rubber composition contains silica, the rubber composition preferably further contains a silane coupling agent. The silane coupling agent is not particularly limited, and examples of the silane coupling agent include: sulfide-based silane coupling agents such as bis(3-triethoxysilylpropyl)tetrasulfide, bis(2-triethoxysilylethyl)tetrasulfide, bis(4-triethoxysilylbutyl)tetrasulfide, bis(3-trimethoxysilylpropyl)tetrasulfide, bis(2-trimethoxysilylethyl)tetrasulfide, bis(2-triethoxysilylethyl)trisulfide, bis(4-trimethoxysilylbutyl)trisulfide, bis(3-triethoxysilylpropyl)disulfide, bis(2-triethoxysilylethyl)disulfide, bis(4-triethoxysilylbutyl)disulfide, bis(3-trimethoxysilylpropyl)disulfide, bis(2-trimethoxysilylethyl)disulfide, bis(4-trimethoxysilylbutyl)disulfide, 3-trimethoxysilylpropyl-N,N-dimethylthiocarbamoyl tetrasulfide, 2-triethoxysilylethyl-N,N-dimethylthiocarbamoyl tetrasulfide, and 3-triethoxysilylpropyl methacrylate monosulfide; mercapto-based silane coupling agents such as 3-mercaptopropyltrimethoxysilane, 2-mercaptoethyltriethoxysilane, and NXT and NXT-Z manufactured by Momentive; vinyl-based silane coupling agents such as vinyltriethoxysilane and vinyltrimethoxysilane; amino-based silane coupling agents such as 3-aminopropyltriethoxysilane and 3-aminopropyltrimethoxysilane; glycidoxy-based silane coupling agents such as $\gamma$-glycidoxypropyltriethoxysilane and $\gamma$-glycidoxypropyltrimethoxysilane; nitro-based silane coupling agents such as 3-nitropropyltrimethoxysilane and 3-nitropropyltriethoxysilane; and chloro-based silane coupling agents such as 3-chloropropyltrimethoxysilane and 3-chloropropyltriethoxysilane. As commercially available products, products of Degussa, Momentive, Shin-Etsu Silicones, Tokyo Chemical Industry Co., Ltd., AZmax, Dow Corning Toray Co., Ltd., etc., can be used. These silane coupling agents may be used individually, or two or more of these silane coupling agents may be used in combination.

The amount of the silane coupling agent per 100 parts by mass of the silica is preferably not less than 3 parts by mass and more preferably not less than 6 parts by mass. When the amount is not less than the lower limit, good fracture strength, etc., tend to be achieved. In addition, the amount is preferably not greater than 20 parts by mass and more preferably not greater than 15 parts by mass. When the amount is not greater than the upper limit, an effect corresponding to the blending amount tends to be achieved.

(Liquid Plasticizer)

From the viewpoint of low heat generation properties, processability, and rubber strength, the rubber composition preferably contains a liquid plasticizer. The liquid plasticizer is not particularly limited as long as the plasticizer is in liquid form at 20°C, and examples of the liquid plasticizer include oils, liquid resins, and liquid diene-based polymers. These plasticizers may be used individually, or two or more of these plasticizers may be used in combination.

Examples of the oils include process oils, vegetable oils, and mixtures thereof. As the process oil, for example, paraffinic process oil, aromatic process oil, naphthenic process oil, or the like can be used. Examples of the vegetable oils include castor oil, cotton seed oil, linseed oil, rapeseed oil, soybean oil, palm oil, coconut oil, peanut oil, rosin, pine oil, pine tar, tall oil, corn oil, rice bran oil, safflower oil, sesame oil, olive oil, sunflower oil, palm kernel oil, camellia oil, jojoba oil, macadamia nut oil, and tung oil. As commercially available products, products of Idemitsu Kosan Co., Ltd., Sankyo Yuka Kogyo K.K., JXTG Nippon Oil & Energy Corporation, Olisoy, H&R, Hokoku Corporation, Showa Shell Sekiyu K.K., FUJI KOSAN COMPANY, LTD., The Nisshin OilliO Group, Ltd., etc., can be used.

Examples of the liquid resins include terpene-based resins (including terpene-phenol resins and aromatic modified terpene resins), rosin resins, styrene-based resins, C5-based resins, C9-based resins, C5/C9-based resins, dicyclopentadiene (DCPD) resins, coumarone-indene-based resins (including coumarone resins and indene resins), phenol resins, olefin-based resins, polyurethane resins, and acrylic resins that are in liquid form at 20°C.

Examples of the liquid diene-based polymers include liquid styrene-butadiene copolymers (liquid SBRs), liquid butadiene polymers (liquid BRs), liquid isoprene polymers (liquid IRs), liquid styrene-isoprene copolymers (liquid SIRs), liquid styrene-butadiene-styrene block copolymers (liquid SBS block polymers), liquid styrene-isoprene-styrene block copolymers (liquid SIS block polymers), liquid farnesene polymers, and liquid farnesene-butadiene copolymers that are in liquid form at 20°C. The terminals and the main chains of these polymers may be modified with polar groups.

The amount of the liquid plasticizer (total amount of the liquid plasticizer) per 100 parts by mass of the rubber component is preferably not less than 1 part by mass, more preferably not less than 2 parts by mass, and further preferably not less than 3 parts by mass. The upper limit of the amount is preferably not greater than 30 parts by mass, more preferably not greater than 20 parts by mass, and further preferably not greater than 10 parts by mass. When the amount is set to be within the above range, combined performance of low heat generation properties, processability, and rubber strength tends to be improved.

(Resin)

The rubber composition may contain a resin (solid resin: a resin in solid form at normal temperature (25°C)).

Examples of the resin (solid resin) include aromatic vinyl polymers, coumarone-indene resins, coumarone resins, indene resins, phenol resins, rosin resins, petroleum resins, terpene-based resins, and acrylic-based resins. As commercially available products, products of Maruzen Petrochemical Co., Ltd., Sumitomo Bakelite Co., Ltd., YASUHARA CHEMICAL CO., LTD, Tosoh Corporation, Rutgers Chemicals AG, BASF, Arizona Chemical Company, NITTO CHEMICAL CO., LTD., NIPPON SHOKUBAI CO., LTD., JXTG Nippon Oil & Energy Corporation, Arakawa Chemical Industries, Ltd., Taoka Chemical Co., Ltd., TOAGOSEI CO., LTD., etc., can be used. These resins may be used individually, or two or more of these resins may be used in combination.

The aromatic vinyl polymers refer to resins obtained by polymerizing $\alpha$-methylstyrene and/or styrene, and examples of such resins include styrene homopolymers (styrene resins), $\alpha$-methylstyrene homopolymers ($\alpha$-methylstyrene resins), copolymers of $\alpha$-methylstyrene and styrene, and copolymers of styrene and other monomers.

The coumarone-indene resins refer to resins that contain coumarone and indene as main monomer components that form the backbone (main chain) of the resins. Examples of the monomer components included in the backbone other than coumarone and indene include styrene, $\alpha$-methylstyrene, methylindene, and vinyltoluene.

The coumarone resins refer to resins that contain coumarone as a main monomer component that forms the backbone (main chain) of the resins.

The indene resins refer to resins that contain indene as a main monomer component that forms the backbone (main chain) of the resins.

Examples of the phenol resins include resins obtained by reacting phenol with aldehydes such as formaldehyde, acetaldehyde, and furfural by an acid or alkali catalyst. Among them, resins obtained by reaction using an acid catalyst (novolac type phenol resins, etc.) are preferable.

Examples of the rosin resins include rosin-based resins typified by natural rosin, polymerized rosin, modified rosin, ester compounds of these rosins, and hydrogenated products of these rosins.

Examples of the petroleum resins include C5-based resins, C9-based resins, C5/C9-based resins, and dicyclopentadiene (DCPD) resins.

As the terpene-based resin, polyterpene resins each obtained by polymerizing a terpene compound, aromatic modified terpene resins each obtained by polymerizing a terpene compound and an aromatic compound, etc., can be used. Moreover, hydrogenated products of these resins can also be used.

The polyterpene resins refer to resins obtained by polymerizing terpene compounds. The terpene compounds are hydrocarbons represented by a composition of $(C_5H_8)_n$ and oxygenated derivatives thereof, and are compounds having, as a basic backbone, a terpene classified into monoterpene ($C_{10}H_{16}$), sesquiterpene ($C_{15}H_{24}$), diterpene ($C_{20}H_{32}$), and the like. Examples of the terpene compounds include α-pinene, β-pinene, dipentene, limonene, myrcene, allo-ocimene, ocimene, α-phellandrene, α-terpinene, γ-terpinene, terpinolene, 1,8-cineole, 1,4-cineole, α-terpineol, β-terpineol, and γ-terpineol.

Examples of the polyterpene resins include pinene resins, limonene resins, dipentene resins, and pinene/limonene resins that are formed from the above-described terpene compounds. Among them, pinene resins are preferable since a polymerization reaction is easy and since natural pine resin is a raw material, and thus the cost is low. In general, pinene resins include both α-pinene and β-pinene, which are isomeric with each other. Depending on the contained components, pinene resins are classified into β-pinene resins containing β-pinene as a main component, and α-pinene resins containing α-pinene as a main component.

Examples of the aromatic modified terpene resins include terpene-phenol resins formed from the above terpene compounds and phenol-based compounds, and terpene-styrene resins formed from the above terpene compounds and styrene-based compounds. Moreover, terpene-phenol-styrene resins formed from the above terpene compounds, phenol-based compounds, and styrene-based compounds can also be used. Examples of the phenol-based compounds include phenol, bisphenol A, cresol, and xylenol. Examples of the styrene-based compounds include styrene and α-methylstyrene.

As the acrylic-based resin, styrene-acrylic-based resins, such as a styrene acrylic resin, having a carboxyl group and obtained by copolymerizing an aromatic vinyl monomer component and an acrylic-based monomer component can be used. Among them, a non-solvent type carboxyl group-containing styrene-acrylic-based resin is suitable for use.

The non-solvent type carboxyl group-containing styrene-acrylic-based resin refers to a (meth)acrylic-based resin (polymer) synthesized by a high-temperature continuous polymerization method (high-temperature continuous bulk polymerization method) (the methods disclosed in US Patent No. 4,414,370, Japanese Laid-Open Patent Publication No. S59-6207, Japanese Examined Patent Publication No. H5-58005, Japanese Laid-Open Patent Publication No. H1-313522, US Patent No. 5,010,166, annual research report of Toagosei Co., Ltd., TREND 2000, No. 3, pages 42-45, etc.) by avoiding use of a polymerization initiator, a chain transfer agent, an organic solvent, etc., which are sub-materials, as much as possible. In the present specification, (meth)acrylic means methacrylic and acrylic.

Examples of the acrylic monomer component that forms the acrylic-based resin include (meth)acrylic acid, (meth)acrylic acid esters (alkyl esters such as 2-ethylhexyl acrylate, aryl esters, aralkyl esters, etc.), (meth)acrylamide, and (meth)acrylic acid derivatives such as (meth)acrylamide derivatives. (Meth)acrylic acid is a generic term for acrylic acid and methacrylic acid.

Examples of the aromatic vinyl monomer component that forms the acrylic-based resin include aromatic vinyls such as styrene, α-methylstyrene, vinyltoluene, vinylnaphthalene, divinylbenzene, trivinylbenzene, and divinylnaphthalene.

Moreover, as the monomer component that forms the acrylic-based resin, another monomer component may be used together with (meth)acrylic acid, a (meth)acrylic acid derivative, or an aromatic vinyl.

The sum of the amounts of the resin (solid resin) and the liquid plasticizer (total amount of the resin and the liquid plasticizer) is preferably not less than 1 part by mass, more preferably not less than 2 parts by mass, and further preferably not less than 3 parts by mass. The upper limit of the total amount is preferably not greater than 50 parts by mass, more preferably not greater than 30 parts by mass, and further preferably not greater than 20 parts by mass. When the total amount is set to be within the above range, combined performance of low heat generation properties, processability, and rubber strength tends to be improved.

(Other Materials)

The rubber composition may contain a compound represented by the following formula (I). The compound strengthens the carbon black-polymer bond, and thus fracture properties and low heat generation properties tend to be

improved. In addition, when the reinforcing properties are sufficient, low heat generation properties tend to be further improved due to a reduction in the amount of the carbon black.

[Chem. 2]

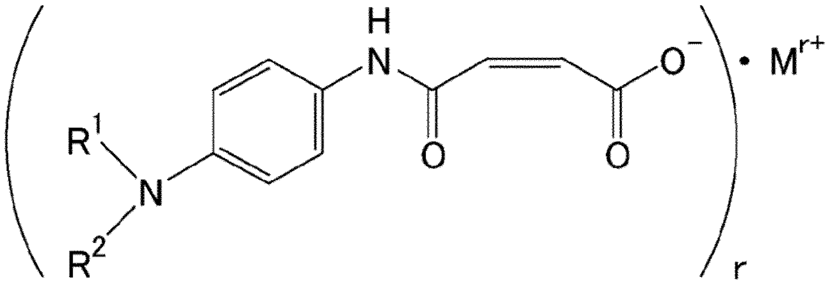

(I)

wherein $R^1$ and $R^2$ are the same or different from each other, and each represent a hydrogen atom, an alkyl group having 1 to 20 carbon atoms, an alkenyl group having 1 to 20 carbon atoms, or an alkynyl group having 1 to 20 carbon atoms, $M^{r+}$ represents a metal ion, and "r" represents the valence of the metal ion.

Examples of the alkyl group as $R^1$ and $R^2$ include a methyl group, an ethyl group, an n-propyl group, an isopropyl group, an n-butyl group, a sec-butyl group, and a tert-butyl group. Examples of the alkenyl group as $R^1$ and $R^2$ include a vinyl group, an allyl group, a 1-propenyl group, and a 1-methylethenyl group. Examples of the alkynyl group as $R^1$ and $R^2$ include an ethynyl group and a propargyl group.

$R^1$ and $R^2$ preferably each represent a hydrogen atom or an alkyl group, more preferably each represent a hydrogen atom or a methyl group, and further preferably each represent a hydrogen atom. That is, the compound represented by the above formula (I) is preferably a compound represented by the following formula (I-1), (I-2), or (I-3), and is more preferably the compound represented by the following formula (I-1).

[Chem. 3]

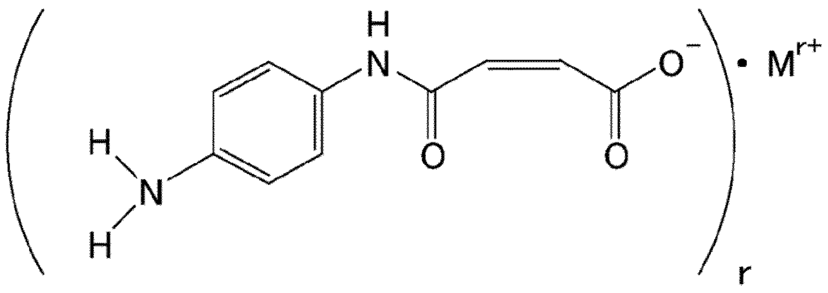

(I-1)

[Chem. 4]

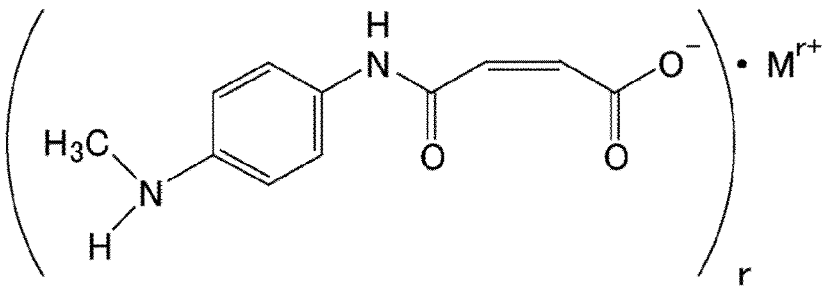

(I-2)

[Chem. 5]

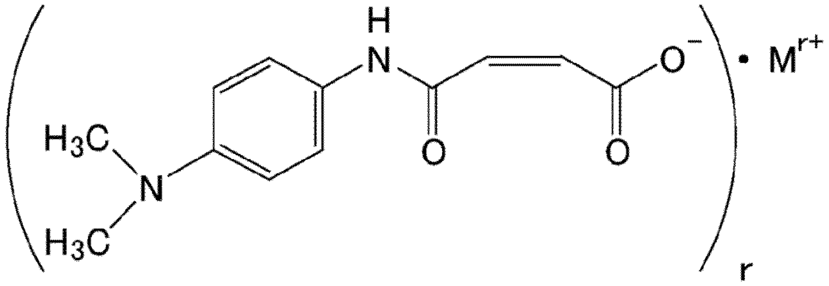

(I -3)

In the above formulas (I), (I-1), (I-2), and (I-3), examples of the metal ion include sodium ion, potassium ion, and lithium ion, and the metal ion is preferably sodium ion.

The amount of the compound represented by formula (I), per 100 parts by mass of the carbon black, is preferably not less than 0.1 parts by mass, more preferably not less than 0.5 parts by mass, and further preferably not less than 1 part by mass. The amount is preferably not greater than 20 parts by mass, more preferably not greater than 10 parts by mass, and further preferably not greater than 5 parts by mass. When the amount is set to be within the above range, fracture properties and low heat generation properties tend to be improved.

From the viewpoint of crack resistance, ozone resistance, etc., the rubber composition preferably contains an antioxidant.

The antioxidant is not particularly limited, but examples of the antioxidant include: naphthylamine antioxidants such as phenyl-$\alpha$-naphthylamine; diphenylamine antioxidants such as octylated diphenylamine and 4,4'-bis($\alpha$,$\alpha$'-dimethylbenzyl)diphenylamine; p-phenylenediamine antioxidants such as N-isopropyl-N'-phenyl-p-phenylenediamine, N-(1,3-dimethylbutyl)-N'-phenyl-p-phenylenediamine, and N,N'-di-2-naphthyl-p-phenylenediamine; quinoline-based antioxidants such as a polymer of 2,2,4-trimethyl-1,2-dihydroquinoline; monophenol antioxidants such as 2,6-di-t-butyl-4-methylphenol and styrenated phenol; and bis-, tris-, and poly-phenol antioxidants such as tetrakis-[methylene-3-(3',5'-di-t-butyl-4'-hydroxyphenyl)propionate]methane. Among them, the p-phenylenediamine antioxidants and the quinoline-based antioxidants are preferable, and N-(1,3-dimethylbutyl)-N'-phenyl-p-phenylenediamine and a polymer of 2,2,4-trimethyl-1,2-dihydroquinoline are more preferable. As commercially available products, for example, products of Seiko Chemical Co., Ltd., Sumitomo Chemical Co., Ltd., Ouchi Shinko Chemical Industrial Co., Ltd., Flexsys, etc., can be used.

The amount of the antioxidant per 100 parts by mass of the rubber component is preferably not less than 0.2 parts by mass and more preferably not less than 0.5 parts by mass. When the amount is set to be not less than the lower limit, sufficient ozone resistance tends to be achieved. The amount is preferably not greater than 7.0 parts by mass and more preferably not greater than 4.0 parts by mass. When the amount is set to be not greater than the upper limit, good tire appearance tends to be achieved.

The rubber composition preferably contains stearic acid. The amount of the stearic acid per 100 parts by mass of the rubber component is preferably 0.5 to 10 parts by mass and more preferably 0.5 to 5 parts by mass.

As the stearic acid, a conventionally known one can be used, and, for example, products of NOF Corporation, Kao Corporation, FUJIFILM Wako Pure Chemical Industries, Ltd., New Japan Chemical Co., Ltd., etc., can be used.

The rubber composition preferably contains zinc oxide. The amount of the zinc oxide per 100 parts by mass of the rubber component is preferably 0.5 to 10.0 parts by mass and more preferably 1.0 to 5.0 parts by mass.

As the zinc oxide, a conventionally known one can be used, and, for example, products of Mitsui Mining & Smelting Co., Ltd., Toho Zinc Co., Ltd., HakusuiTech Co., Ltd., SEIDO CHEMICAL INDUSTRY CO., LTD., Sakai Chemical Industry Co., Ltd., etc., can be used.

The rubber composition may contain a wax. The amount of the wax per 100 parts by mass of the rubber component is preferably 0.1 to 5.0 parts by mass and more preferably 0.5 to 3.0 parts by mass.

The wax is not particularly limited, and examples of the wax include petroleum waxes and natural waxes. In addition, a synthetic wax obtained by refining or chemically treating a plurality of waxes can also be used. These waxes may be used individually, or two or more of these waxes may be used in combination. Examples of the petroleum waxes include paraffin wax and microcrystalline wax. The natural waxes are not particularly limited as long as the natural waxes are derived from materials other than petroleum. Examples of the natural waxes include: vegetable waxes such as candelilla wax, carnauba wax, Japan wax, rice wax, and jojoba wax; animal waxes such as beeswax, lanolin, and whale wax; mineral waxes such as ozokerite, ceresin, and petrolatum; and refined products thereof. As commercially available products, for example, products of Ouchi Shinko Chemical Industrial Co., Ltd., NIPPON SEIRO CO., LTD., Seiko Chemical Co., Ltd., etc. can be used. The amount of the wax may be set as appropriate in view of ozone resistance and cost.

The rubber composition preferably contains sulfur from the viewpoint of moderately forming crosslinked chains

in the polymer chain and imparting good physical properties such as crack growth resistance.

From the viewpoint of physical properties such as crack growth resistance, the amount of the sulfur per 100 parts by mass of the rubber component is preferably not less than 1.2 parts by mass, more preferably not less than 1.4 parts by mass, further preferably not less than 1.6 parts by mass, and particularly preferably not less than 1.8 parts by mass. The upper limit of the amount is not particularly limited, but the amount is preferably not greater than 6.0 parts by mass, more preferably not greater than 4.0 parts by mass, and further preferably not greater than 3.0 parts by mass.

Examples of the sulfur include powdery sulfur, precipitated sulfur, colloidal sulfur, insoluble sulfur, highly dispersible sulfur, and soluble sulfur, which are generally used in the rubber industry. As commercially available products, products of Tsurumi Chemical Industry Co., Ltd., Karuizawa Sulfur Co, Ltd., SHIKOKU CHEMICALS CORPORATION, Flexsys, Nippon Kanryu Industry Co., Ltd., Hosoi Chemical Industry Co., Ltd., etc., can be used. These sulfurs may be used individually, or two or more of these sulfurs may be used in combination.

The rubber composition preferably contains a vulcanization accelerator.

The amount of the vulcanization accelerator is not particularly limited and may be freely determined in accordance with a desired vulcanization rate or crosslink density. From the viewpoint of improving combined performance of low heat generation properties, processability, and rubber strength, the amount of the vulcanization accelerator per 100 parts by mass of the rubber component is preferably not less than 0.3 parts by mass, more preferably not less than 0.5 parts by mass, and further preferably not less than 0.6 parts by mass. The upper limit of the amount is preferably not greater than 3.0 parts by mass, more preferably not greater than 1.6 parts by mass, and further preferably not greater than 1.3 parts by mass.

The type of the vulcanization accelerator is not particularly limited, and vulcanization accelerators that are normally used can be used. Examples of the vulcanization accelerator include: thiazole-based vulcanization accelerators such as 2-mercaptobenzothiazole, di-2-benzothiazolyl disulfide, and N-cyclohexyl-2-benzothiazyl sulfenamide; thiuram-based vulcanization accelerators such as tetramethylthiuram disulfide (TMTD), tetrabenzylthiuram disulfide (TBzTD), and tetrakis (2-ethylhexyl)thiuram disulfide (TOT-N); sulfenamide-based vulcanization accelerators such as N-cyclohexyl-2-benzothiazole sulfenamide, N-t-butyl-2-benzothiazolyl sulfenamide, N-oxyethylene-2-benzothiazole sulfenamide, and N,N'-diisopropyl-2-benzothiazole sulfenamide; and guanidine-based vulcanization accelerators such as diphenylguanidine, diorthotolylguanidine, and orthotolylbiguanidine. These vulcanization accelerators may be used individually, or two or more of these vulcanization accelerators may be used in combination. Among them, sulfenamide-based vulcanization accelerators and guanidine-based vulcanization accelerators are preferable.

In addition to the above components, the rubber composition may contain ingredients that are generally used in the tire industry, for example, materials such as a mold lubricant, as appropriate.

As a method for producing the rubber composition, a known method can be used. For example, the rubber composition can be produced by a method in which the above respective components are kneaded using a rubber kneading device such as an open roll and a Banbury mixer and then vulcanization is performed.

As for the kneading conditions, in a base kneading step of kneading the additives other than a vulcanizing agent and the vulcanization accelerator, the kneading temperature is normally 50 to 200°C and preferably 80 to 190°C, and the kneading time is normally 30 seconds to 30 minutes and preferably 1 minute to 30 minutes. In a finish kneading step of kneading the vulcanizing agent and the vulcanization accelerator, the kneading temperature is normally not higher than 100°C and preferably room temperature to 80°C. In addition, a composition obtained by kneading the vulcanizing agent and the vulcanization accelerator is normally subjected to vulcanization processing such as press vulcanization. The vulcanization temperature is normally 120 to 200°C and preferably 140 to 180°C.

[Tire]

The tire according to the present invention is produced by a normal method using the above-described rubber composition. Specifically, an unvulcanized tire is formed by extruding a rubber composition obtained by blending each component, in an unvulcanized state so as to correspond to the shape of each of a sidewall, and shaping the extruded rubber composition together with other tire members on a tire shaping machine by a general method. A tire is obtained by heating and pressurizing the unvulcanized tire in a vulcanizing machine.

Examples of the tire include pneumatic tires and airless tires such as solid tires, and among them, pneumatic tires are preferable. The tire can be used as a tire for a passenger car, a tire for a large-sized passenger car, a tire for a large-sized SUV, a heavy duty tire for a truck or a bus, a tire for a light truck, a tire for a motorcycle, a high-performance tire such as a tire for racing, etc. In addition, the tire can be used as a tire for all seasons, a tire for summer, a tire for winter such as a studless tire, etc.

The tire satisfies the following formula (1).

$$\text{Cross-section height (H)/cross-section width (W)} \times 100 \geq 60\% \qquad (1)$$

From the viewpoint of being able to relieve stress concentration and impart good crack growth resistance, etc., the tire satisfies H/W $\times$ 100 $\geq$ 60%. The upper limit thereof is not particularly limited, but is not greater than 100%. The cross-section height is the distance from a bead base line to a radially outer end of the tire, the cross-section width is the distance between the right and left axially outer ends of the tire, and the cross-section height and the cross-section width are represented by Hand W, respectively, in a later-described tire in FIG. 1.

In the tire, from the viewpoint of being able to relieve stress concentration and impart good crack growth resistance, etc., the thickness of each sidewall is not less than 1.5 mm. The thickness is more preferably not less than 2.0 mm, further preferably not less than 2.3 mm, and particularly preferably not less than 2.5 mm. The upper limit of the thickness is not particularly limited, but the thickness is preferably not greater than 5.0 mm, more preferably not greater than 4.7 mm, and further preferably not greater than 4.5 mm. The thickness is the distance in the tire axial direction from the right or left axially outer end (sidewall surface) of the tire to a carcass cord surface (including a carcass cord-covering rubber), and is represented by Wsw in the later-described tire in FIG. 1.

FIG. 1 is a tire meridional cross-sectional view showing an example of a pneumatic tire 1 in a normal state according to an embodiment. In FIG. 1, the up-down direction is the radial direction of the tire 1, the right-left direction is the axial direction of the tire 1, and the direction perpendicular to the surface of the sheet of FIG. 1 is the circumferential direction of the tire 1.

In FIG. 1, an alternate long and short dash line CL represents the equator plane of the tire 1. A dotted line BBL extending in the axial direction is a bead base line. The bead base line BBL is a line that defines the rim diameter (see JATMA or the like) of a rim R.

Reference character PE represents the point of intersection of the outer surface and the equator plane CL of the tire 1. The point of intersection PE is also referred to as equator. The point of intersection PE is also the radially outer end of the tire 1. A double-headed arrow H represents a cross-section height (see JATMA) of the tire 1. The cross-section height H is represented as the distance in the radial direction from the bead base line BBL to the equator PE (distance from the bead base line BBL to the radially outer end of the tire 1). Reference character PW represents an axially outer end of the tire 1. In other words, the outer end PW is a position, on the outer surface of the tire 1, at which the tire 1 has a maximum width in the axial direction. A double-headed arrow W represents a cross-section width (see JATMA) of the tire 1. The cross-section width W is represented as the distance in the axial direction from one outer end PW to the other outer end PW (distance between the right and left axially outer ends of the tire 1). The tire 1 satisfies the formula (1) "cross-section height H/cross-section width W $\times$ 100 $\geq$ 50%".

In FIG. 1, the tire 1 is fitted on the rim R. The rim R is a normal rim. The interior of the tire 1 is filled with air. Accordingly, the internal pressure of the tire 1 is adjusted to a normal internal pressure.

In the present description, unless otherwise specified, the dimensions (dimensions such as cross-section width, cross-section height, and sidewall thickness) and angles of each member of the tire 1 are measured in a state where the tire 1 is fitted on a normal rim and filled with air to a normal internal pressure (also referred to as normal state). At the time of measurement, no load is applied to the tire 1. In the case where the tire 1 is for a passenger car, the dimensions and the angles are measured in a state where the internal pressure is 180 kPa.

The normal rim means a rim specified in a standard on which the tire 1 is based. The "standard rim" in the JATMA standard, the "Design Rim" in the TRA standard, and the "Measuring Rim" in the ETRTO standard are normal rims. The normal internal pressure means an internal pressure specified in the standard on which the tire 1 is based. The "highest air pressure" in the JATMA standard, the "maximum value" recited in "TIRE LOAD LIMITS AT VARIOUS COLD INFLATION PRESSURES" in the TRA standard, and the "INFLATION PRESSURE" in the ETRTO standard are normal internal pressures.

The tire 1 includes: a carcass 6 extending from a tread portion 2 through sidewall portions 3 to bead cores 5 of bead portions 4; and a belt layer 7 disposed outward of the carcass 6 in the tire radial direction and in the tread portion 2.

The carcass 6 includes at least one carcass ply. In the present embodiment, the carcass 6 includes two carcass plies 6A and 6B. In each of the carcass plies 6A and 6B, carcass cords (not shown) are arranged, for example, at an angle of 75 to 90 degrees with respect to the tire circumferential direction. For example, organic fiber cords made of aromatic polyamide, rayon, or the like can be used as the carcass cords.

Each of the carcass plies 6A and 6B in the present embodiment includes a main body portion 6a extending from the tread portion 2 through the sidewall portions 3 to the bead cores 5 of the bead portions 4, and turned-up portions 6b each connected to the main body portion 6a and turned up around the bead core 5 from the inner side to the outer side in the tire axial direction. Bead apex rubbers 8 are disposed between the main body portions 6a and the turned-up portions 6b of the respective carcass plies 6A and 6B so as to extend from the bead cores 5 outwardly in the tire radial direction.

The belt layer 7 includes at least one belt ply. In the present embodiment, the belt layer 7 includes two belt plies 7A and 7B. The belt plies 7A and 7B are formed, for example, as an inner belt ply 7A disposed on the carcass 6 side and an outer belt ply 7B disposed outward of the inner belt ply 7A in the tire radial direction. In each of the belt plies 7A and 7B, belt cords (not shown) are preferably arranged so as to be tilted at an angle of 10 to 35° relative to the tire

circumferential direction. The inner belt ply 7A and the outer belt ply 7B in the present embodiment overlap each other such that the belt cords thereof intersect each other.

For example, steel, aromatic polyamide, rayon, and the like are suitable for use for the belt cords. The belt layer 7 in the present embodiment includes two belt plies 7A and 7B, but may include three or more belt plies. In this case, the outer belt ply 7B is the belt ply disposed on the outermost side in the tire radial direction among the multiple belt plies.

A sidewall 11 of each sidewall portion 3 is located axially outward of the carcass 6. A thickness Wsw of the sidewall 11 is represented as the distance in the tire axial direction from the outer end PW (sidewall surface) to the carcass cord (not shown) surface of the carcass 6 (distance Wsw in the tire axial direction from the right or left axially outer end (sidewall surface) of the tire to the carcass cord surface).

EXAMPLES

The following is the description of various chemicals used in examples and comparative examples.

NR: TSR20
BR: BR150B (cis content: 97% by mass) manufactured by Ube Industries, Ltd.
Carbon black (ISAF): DIABLACK I ($N_2SA$: 114 $m^2/g$) manufactured by Mitsubishi Chemical Corporation
Carbon black (FEF): DIABLACK E ($N_2SA$: 41 $m^2/g$) manufactured by Mitsubishi Chemical Corporation
Recycled rubber: GF-80 REPROCESSED GROUND RUBBER (powder recycled rubber, particle size: 80 mesh) manufactured by Lehigh Technologies, Inc.
Modified rubber crumb: EkoDyne manufactured by Lehigh Technologies, Inc.
Oil: Diana Process NH-70S (aromatic process oil) manufactured by Idemitsu Kosan Co., Ltd.
Wax: OZOACE OZ0355 manufactured by NIPPON SEIRO CO., LTD.
Antioxidant 6C: NOCRAC 6C (N-phenyl-N'-(1,3-dimethylbutyl)-p-phenylenediamine) manufactured by Ouchi Shinko Chemical Industrial Co., Ltd.
Antioxidant RD: NOCRAC 224 (poly(2,2,4-trimethyl-1,2-dihydroquinoline)) manufactured by Ouchi Shinko Chemical Industrial Co., Ltd.
Stearic acid: Stearic Acid "CAMELLIA" manufactured by NOF Corporation
Zinc oxide: Zinc Oxide Type-2 manufactured by Mitsui Mining & Smelting Co., Ltd.
Sulfur: insoluble sulfur containing 10% of oil (Seimi Sulfur (insoluble sulfur having an insoluble component by carbon disulfide of 60% or greater, oil component: 10 %) manufactured by Nippon Kanryu Industry Co., Ltd.)
Vulcanization accelerator NS: NOCCELER NS (N-tert-butyl-2-benzothiazolyl sulfenamide) manufactured by Ouchi Shinko Chemical Industrial Co., Ltd.

On the assumption of use for the sidewalls of various tires according to each table and the following production conditions and test conditions using the above various chemicals, the crack growth resistance thereof was calculated. The results are shown in the cells of evaluation in each table.

(Production Conditions)

The chemicals other than the sulfur and the vulcanization accelerator were kneaded under a condition of 150°C for 4 minutes by using a 1.7-L Banbury mixer manufactured by Kobe Steel, Ltd., the sulfur and the vulcanization accelerator were added next, the mixture was kneaded under a condition of 80°C for 5 minutes by using an open roll, and then an unvulcanized rubber composition was produced.

Then, the unvulcanized rubber composition was formed into the shape of a sidewall and attached together with other tire members on a tire forming machine, and press vulcanization was performed under a condition of 170°C for 20 minutes to produce a test tire (tire size: 215/65R17, 215/60R17, 215/55R17, 215/40R17).

(Test Conditions for Elongation at Break)

A vulcanized rubber sheet (vulcanized rubber composition) was produced (sampled) from the sidewall of a test tire. Next, according to JIS K6251: 2010, "Rubber, vulcanized or thermoplastics-Determination of tensile stress-strain properties", a tensile test was carried out under a condition of a temperature of 23°C, using a No. 3 dumbbell type test piece formed from the sampled vulcanized rubber sheet (vulcanized rubber composition), to measure an elongation at break at 23°C (EB(23°C)). The higher the EB(23°C) is, the better the strength against tensile fracture is.

(Test Conditions for Crack Growth Resistance Test)

The tire buttress portion of a test tire was cut with a cutter to make a cut with a length of 5 mm and a depth of 1 mm at three locations on the periphery thereof, the test tire was caused to run at 100 km/h with a load of 80% of LI MAX applied thereto, and the average of crack growth distances at the three locations was measured after running for a certain distance. The results are shown as an index for each test tire with the value of Reference Comparative Example 1 being regarded as 100. The higher the index is, the better the crack growth resistance is.

[Table 1]

Sidewall blending formula

| | | Blending formula example | | | | | | | |
|---|---|---|---|---|---|---|---|---|---|
| | | A | B | C | D | E | F | G | H |
| Blending formula (parts by mass) | NR | 50 | 50 | 50 | 50 | 100 | 50 | 50 | 50 |
| | BR | 50 | 50 | 50 | 50 | | 50 | 50 | 50 |
| | Carbon black (ISAF) | 20 | 20 | | 20 | | 20 | 30 | 20 |
| | Carbon black (FEF) | 30 | 30 | 50 | 30 | 50 | 30 | 30 | 30 |
| | Recycled rubber | 10 | 20 | 10 | 10 | 10 | 20 | 20 | |
| | Modified rubber crumb | 10 | | 10 | 10 | 10 | 10 | 10 | 25 |
| | Oil | 5 | 5 | 5 | 5 | 5 | 5 | 5 | 5 |
| | Wax | 1 | 1 | 1 | 1 | 1 | 1 | 1 | 1 |
| | Antioxidant 6C | 2 | 2 | 2 | 2 | 2 | 2 | 2 | 2 |
| | Antioxidant RD | 1 | 1 | 1 | 1 | 1 | 1 | 1 | 1 |
| | Stearic acid | 2 | 2 | 2 | 2 | 2 | 2 | 2 | 2 |
| | Zinc oxide | 3 | 3 | 3 | 3 | 3 | 3 | 3 | 3 |
| | Sulfur (total sulfur amount) | 1.8 | 1.8 | 1.8 | 1.4 | 1.8 | 1.8 | 2.5 | 1.8 |
| | Vulcanization accelerator NS | 0.8 | 0.8 | 0.8 | 0.8 | 0.8 | 0.8 | 1.8 | 0.8 |
| Physical properties | Elongation at break (EB(23°C)) | 560 | 530 | 540 | 550 | 580 | 550 | 450 | 570 |

[Table 2]

| Tire specifications | Example | | | | | | | | | | Comparative Example | | | |
|---|---|---|---|---|---|---|---|---|---|---|---|---|---|---|
| | 1 | 2 | 3 | 4 | 5 | 6 | 7 | 8 | 9 | 10 | 1 | 2 | 3 | 4 |
| Sidewall blending formula | A | C | D | E | F | H | A | A | A | A | B | E | G | A |
| Cross-section height/cross-section width × 100 (%) | 60 | 60 | 60 | 60 | 60 | 60 | 55 | 65 | 60 | 60 | 60 | 40 | 60 | 40 |
| Sidewall thickness (mm) | 2.5 | 2.5 | 2.5 | 2.5 | 2.5 | 2.5 | 2.5 | 2.5 | 2.0 | 3.0 | 2.5 | 2.5 | 2.5 | 1.5 |
| Crack growth resistance test (index) | 135 | 132 | 123 | 112 | 120 | 130 | 133 | 136 | 124 | 140 | 100 | 96 | 89 | 94 |

(Example 7 is not according to the invention.)

Since the tire of each Example includes sidewalls (vulcanized rubber composition) in which the modified rubber crumb is used and which have an elongation at break (EB) of not less than 500%, it is possible to increase a use ratio of recycled rubber or powder rubber and to impart higher rubber strength to improve crack growth resistance, strength against tensile fracture, etc. Furthermore, since the tire size satisfies the formula (1), the strain due to rolling is small, and stress concentration is relieved, so that good durability such as crack growth resistance can be imparted. Thus, by using the tire of each Example that includes sidewalls containing the modified rubber crumb and having an elongation at break of not less than 500% and that satisfies the formula (1), the crack growth resistance of the sidewalls can be improved while increasing the use ratio of recycled rubber or powder rubber.

## Claims

1. A tire (1) comprising sidewalls (11) each formed from a rubber composition containing a modified rubber crumb, wherein in the modified rubber crumb a part of the crosslinked structure in the rubber is cut by desulfurization and functionalization to increase the reactivity thereof, wherein said rubber composition has an elongation at break at 23°C of not less than 500%, **characterised in that**
the tire (1) satisfies the following formula (1),

$$\text{cross-section height/cross-section width} \times 100 \geq 60\% \qquad (1)$$

and each of the sidewalls (11) has a thickness (Wsw) of not less than 1.5 mm.

2. The tire (1) according to claim 1, wherein the rubber composition contains an isoprene-based rubber and a butadiene rubber.

3. The tire (1) according to claim 1 or 2, wherein the rubber composition contains 1.4 parts by mass or greater of sulfur per 100 parts by mass of a rubber component.

4. The tire (1) according to any one of claims 1 to 3, wherein the rubber composition contains a carbon black A having a nitrogen adsorption specific surface area of 100 to 150 $m^2/g$ and a carbon black B having a nitrogen adsorption specific surface area of 10 to 80 m2/g.

5. The tire (1) according to any one of claims 1 to 4, wherein the modified rubber crumb is a rubber crumb functionalized with a thiuram sulfide-based compound.

## Patentansprüche

1. Reifen (1), der Seitenwände (11) umfasst, die jeweils mit einer Kautschukzusammensetzung gebildet sind, die ein modifiziertes Kautschukgranulat enthält, wobei in dem modifizierten Kautschukgranulat ein Teil der vernetzten Struktur in dem Kautschuk durch Entschwefelung und Funktionalisierung aufgespalten ist, um seine Reaktivität zu steigern, wobei die Kautschukzusammensetzung eine Bruchdehnung bei 23°C von nicht weniger als 500% aufweist, **dadurch gekennzeichnet, dass**
der Reifen (1) der folgenden Formel (1) genügt,

$$\text{Querschnittshöhe/Querschnittsbreite} \times 100 \geq 60\% \qquad (1)$$

und jede der Seitenwände (11) eine Dicke (Wsw) von nicht weniger als 1,5 mm aufweist.

2. Reifen (1) nach Anspruch 1, wobei die Kautschukzusammensetzung einen Isopren-basierten Kautschuk und einen Butadienkautschuk enthält.

3. Reifen (1) nach Anspruch 1 oder 2, wobei die Kautschukzusammensetzung 1,4 Massenteile oder mehr an Schwefel pro 100 Massenteile einer Kautschukkomponente enthält.

4. Reifen (1) nach einem der Ansprüche 1 bis 3, wobei die Kautschukzusammensetzung einen Ruß A, der eine spezifische Stickstoffadsorptionsoberfläche von 100 bis 150 $m^2/g$ aufweist, und einen Ruß B, der eine spezifische Stickstoffadsorptionsoberfläche von 10 bis 80 $m^2/g$ aufweist, enthält.

5. Reifen (1) nach einem der Ansprüche 1 bis 4, wobei das modifizierte Kautschukgranulat ein Kautschukgranulat ist, das mit einer Thiuramsulfidbasierten Verbindung modifiziert ist.

**Revendications**

1. Pneumatique (1) comprenant des parois latérales (11), chacune formée à base d'une composition de caoutchouc contenant des miettes de caoutchouc modifié, dans lequel les miettes de caoutchouc modifié d'une partie de la structure réticulée dans le caoutchouc sont coupées par une désulfurisation et une fonctionnalisation pour augmenter leur réactivité, dans lequel ladite composition de caoutchouc possède une élongation à la rupture à 23 °C non inférieure à 500 %, **caractérisé en ce que**
le pneumatique (1) satisfait à la formule (1) suivante

hauteur de la section transversale/largeur de la section transversale × 100 ≥ 60 % (1)

et chacune des parois latérales (11) a une épaisseur (Wsw) non inférieure à 1,5 mm.

2. Pneumatique (1) selon la revendication 1, dans lequel la composition de caoutchouc contient un caoutchouc à base d'isoprène et un caoutchouc de butadiène.

3. Pneumatique (1) selon la revendication 1 ou la revendication 2, dans lequel la composition de caoutchouc contient 1,4 parties en masse ou plus de soufre pour 100 parties en masse de composant de caoutchouc.

4. Pneumatique (1) selon l'une quelconque des revendications 1 à 3, dans lequel la composition de caoutchouc contient un noir de carbone A ayant une aire de surface spécifique par adsorption d'azote de 100 à 150 $m^2/g$ et un noir de carbone B ayant une aire de surface spécifique par adsorption d'azote de 10 à 80 $m^2/g$.

5. Pneumatique (1) selon l'une quelconque des revendications 1 à 4, dans lequel les miettes de caoutchouc modifié sont des miettes de caoutchouc fonctionnalisées avec un composé à base de sulfure de thiurame.

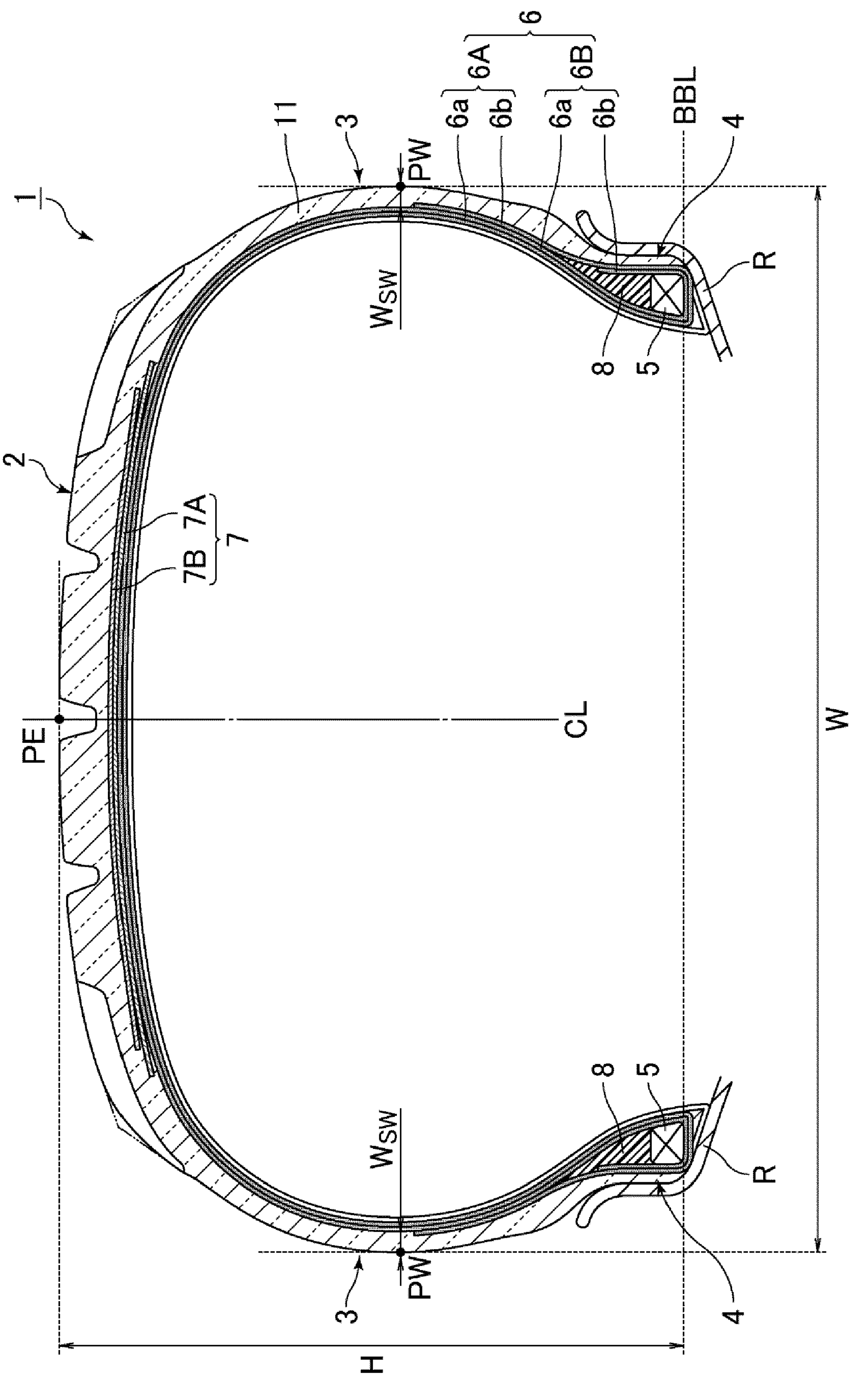


Fig. 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2002338743 A
- JP 2005002140 A
- JP 2019026758 A
- US 2014228505 A1
- US 4414370 A
- JP S596207 A
- JP H558005 B
- JP H1313522 A
- US 5010166 A


### Non-patent literature cited in the description


- TREND 2000. Toagosei Co., Ltd, 42-45